# FASCICULE DE BREVET EUROPEEN

(11) **EP 3 411 281 B1**
(45) Date de publication et mention de la délivrance du brevet: **04.03.2020**
(21) Numéro de dépôt: 17706556.2
(22) Date de dépôt: 23.01.2017
(51) Int. Cl.: B62D 25/14

(54) **TRAVERSE DE POSTE DE CONDUITE DE VÉHICULE AUTOMOBILE**
QUERTRÄGER EINER FAHRERKABINE EINES KRAFTFAHRZEUGS
CROSS-MEMBER OF A DRIVER'S COMPARTMENT OF A MOTOR VEHICLE

(30) Priorité: 01.02.2016 FR 1650775
(43) Date de publication de la demande: 12.12.2018
(73) Titulaire: RENAULT s.a.s., 92100 Boulogne-Billancourt (FR)
(72) Inventeur: PEAN, Frederic, 92100 Boulogne -Billancourt (FR); BOUGAULT, Michel, 78380 Bougival (FR)
(86) Numéro de dépôt international: PCT/FR2017/050132
(87) Numéro de publication internationale: WO 2017/134362

(56) Documents cités:
- DE-A1-102013 102 292
- FR-A1- 3 017 362
- US-A- 5 934 733

## Description

La présente invention se rapporte à une traverse de poste de conduite de véhicule automobile comprenant un support de boîtier électronique.

La traverse de poste de conduite est un élément fondamental des véhicules automobiles. Elle porte notamment la colonne de direction, la planche de bord, l'airbag passager, le vide poche et également les boîtiers électroniques du poste de conduite. Usuellement, la traverse de poste de conduite comprend deux tubes sensiblement coaxiaux montés dans le prolongement l'un de l'autre, un premier tube s'étendant au regard du siège conducteur et un second tube s'étendant en regard du siège passager. Les deux extrémités opposées des deux tubes sont solidaires respectivement de deux flasques latéraux, eux-mêmes solidaires de la caisse, tandis qu'une béquille est montée au niveau de la jonction des deux tubes sensiblement à mi-distance des deux flasques latéraux.
Le document DE 10 2013 102292 A1 décrit une traverse de poste de conduite de véhicule automobile selon le préambule de la revendication 1.

La colonne de direction et le volant qui la prolonge constituent des masses s'étendant en porte-à-faux du premier tube et contribuent ainsi à amplifier les vibrations de l'ensemble. Au surplus, des supports de boîtiers électroniques sont installés sur le premier tube, soit au moyen d'étriers ou bien directement soudés. Ces supports de boîtiers électroniques, de plus en plus nombreux, viennent s'étendre en porte-à-faux également du premier tube et contribuent, de par leur masse, à alimenter les vibrations. Aussi, il est nécessaire d'adapter les supports de boîtier afin que leur mode vibratoire soit décalé en fréquence vis-à-vis des modes vibratoires de la colonne de direction notamment.

En effet, les véhicules automobiles incluent de plus en plus de dispositifs électriques nécessitant d'être contrôlés et commandés grâce à des boîtiers électroniques. Les supports de boîtier mis en place sur les tubes sont réalisés en métal et ils sont donc relativement pesants. D'une façon générale, on cherche à alléger la masse des véhicules automobiles pour en diminuer la consommation d'énergie. De surcroît, on cherche à simplifier le mode de montage des supports de boîtier, afin d'en diminuer le coût d'installation.

Aussi, un problème qui se pose et que vise à résoudre la présente invention est de fournir des supports de boîtier électronique qui permette non seulement d'atténuer les vibrations de la traverse de poste de conduite, mais aussi qui permette de contribuer à la diminution de la consommation des véhicules et à être moins coûteux à l'installation.

Dans ce but, il est proposé une traverse de poste de conduite de véhicule automobile comprenant un organe tubulaire présentant une paroi cylindrique, destiné à venir s'étendre transversalement à l'intérieur d'un véhicule automobile et au moins un support de boîtier électronique destiné à être monté en position fixe sur ledit organe tubulaire ; ledit support de boîtier électronique comprend, d'une part une platine de réception et deux pattes en regard aptes à former pince et s'étendant selon une composante perpendiculaire à ladite platine, et d'autre part, un ergot d'indexation venant s'étendre entre lesdites deux pattes ; et ladite paroi cylindrique dudit organe tubulaire présente un orifice d'indexation apte à recevoir ledit ergot d'indexation lorsque lesdites pattes viennent en prise à cheval sur ledit organe tubulaire.

Ainsi, une caractéristique de l'invention réside dans la mise en œuvre simple et rapide du support de boîtier électronique sur l'organe tubulaire. En effet, les deux pattes en regard viennent enserrer l'organe tubulaire en formant pince, tandis que l'ergot d'indexation traverse sa paroi cylindrique, alors que la platine vient s'étendre en saillie de l'organe tubulaire. Ainsi qu'on l'expliquera ci-après, dans la description détaillée, l'ergot d'indexation vient bloquer en rotation le support de boîtiers par rapport à l'organe tubulaire. De la sorte, le support de boîtier électronique est aisé à mettre en œuvre sur l'organe tubulaire dans lequel un orifice d'indexation a été préalablement ménagé.

En outre, ledit support de boîtier électronique présente un plan axial s'étendant entre lesdites deux pattes en regard, et ladite platine de réception s'étend avantageusement selon une composante perpendiculaire audit plan axial. Préférentiellement, elle s'étend sensiblement perpendiculairement au plan axial. Par conséquent, lorsque le support de boîtier électronique est installé sur l'organe tubulaire, la platine vient s'étendre sensiblement perpendiculairement audit organe tubulaire.

Selon un mode de mise en œuvre de l'invention particulièrement avantageux, ledit support de boîtier électronique comprend une partie formant manchon, ladite partie formant manchon présentant une troncature axiale pour former lesdites deux pattes en regard. De la sorte, et comme on l'expliquera ci-après plus en détail, l'organe tubulaire est engagé par coopération de forme à l'intérieur de la partie formant manchon, de manière à assurer une meilleure solidarisation du support du boîtier et de l'organe tubulaire. Préférentiellement, ladite platine s'étend alors selon un plan moyen sensiblement tangent à ladite partie formant manchon. De la sorte, le boîtier électronique peut être installé sur la platine et partiellement sur l'organe tubulaire.

De plus, ladite partie formant manchon présente une zone opposée à ladite troncature, et ladite platine s'étend, de préférence, librement à partir de ladite zone opposée.

Aussi, ladite platine s'étend selon une direction sensiblement perpendiculaire à ladite partie formant manchon. De la sorte, la platine s'étend naturellement sensiblement perpendiculairement à l'organe tubulaire.

Au surplus, ladite partie formant manchon présente un perçage de fixation. Ainsi, après que le support de boîtier a été installé, sur l'organe tubulaire, on vient parfaire la fixation au moyen d'une vis auto-taraudeuse à travers le perçage de fixation.

Avantageusement, lesdites pattes sont élastiquement déformables entre une position où elles sont rapprochées l'une de l'autre et une position où elles sont écartées l'une de l'autre. De la sorte, lorsque l'on vient engager les deux pattes en regard, à cheval sur l'organe tubulaire, elles tendent à s'écarter élastiquement l'une de l'autre, dans une première phase, puis à se rapprocher grâce au rappel élastique, dans une seconde phase et à s'ajuster parfaitement à force sur l'organe tubulaire. Pendant l'opération, on veille à introduire parallèlement l'ergot d'indexation à travers l'orifice d'indexation de manière à obtenir le blocage en rotation du support de boîtier par rapport à l'organe tubulaire. Ce blocage en rotation du support de boîtier est essentiel car le boîtier vient exercer un effort sur la platine qui tend précisément à exercer un couple de rotation sur le support. On observera que le support de boîtier est également bloqué en translation grâce à la coopération de l'ergot d'indexation et de l'orifice d'indexation.

Préférentiellement, ladite platine, lesdites deux pattes et ledit ergot d'indexation sont moulés ensemble d'une seule pièce. Selon un mode privilégié de mise en œuvre, ladite platine, lesdites deux pattes et ledit ergot d'indexation sont moulés ensemble dans un matériau polymère. De la sorte, on obtient naturellement la déformabilité élastique des deux pattes en regard.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle de trois quarts avant droit d'une traverse de poste de conduite d'un véhicule automobile ;
- la Figure 2 est une vue schématique en perspective de dessous d'éléments de la traverse de poste de conduite représentée sur la Figure 1, selon ; et,
- la Figure 3 est une vue schématique en perspective de dessus des éléments représentés sur la Figure 2.

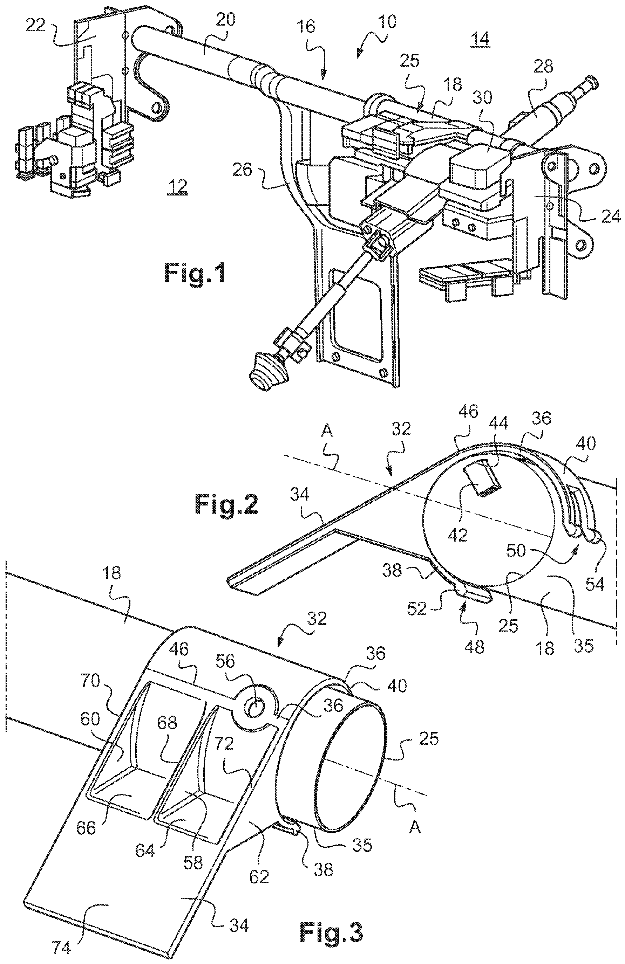

La Figure 1 illustre l'ossature 10 d'une traverse de poste de conduite d'un véhicule automobile, destiné à être étendu transversalement à l'intérieur du véhicule en séparant le compartiment moteur 12 de l'habitacle 14. La traverse comprend un organe tubulaire 16 divisé en deux parties, une première partie 18 qui vient s'étendre en avant de l'espace conducteur et une seconde partie 20 qui vient s'étendre en regard de l'espace passager. Les extrémités de l'organe tubulaire 16 sont respectivement montées solidaires et latéralement d'un flasque droit 22 et d'un flasque gauche 24. Ces deux flasques 22, 24 sont eux-mêmes respectivement solidaires de la caisse du véhicule automobile non représentée. Au centre, les deux parties 18, 20 de l'organe tubulaire 16 sont maintenues en appui sur un dispositif 26 formant béquille.

La première partie 18 d'organe tubulaire 16 s'étendant en avant de l'espace conducteur présente une paroi cylindrique 25. Elle supporte la colonne de direction 28 et un certain nombre de boîtiers électroniques 30, par l'intermédiaire d'un support de boîtier 32 que l'on décrira en détail en référence aux Figures 2 et 3.

On retrouve partiellement sur les Figures 2 et 3, la première partie 18 d'organe tubulaire 16. La paroi cylindrique 25 de la première partie 18 présente une section droite circulaire.

S'agissant du support de boîtier 32 il est réalisé d'une seule pièce en matière plastique de préférence par moulage. Il comprend une platine de réception 34 et une partie d'ancrage 36. La partie d'ancrage 36 présente la forme d'un manchon d'axe de symétrie A et tronqué axialement pour faire apparaître une troncature 35 et former ainsi deux pattes en regard 38, 40. Les deux pattes en regard 38, 40, concaves, s'étendent de part et d'autre d'un plan axial et sont aptes à enserrer la première partie 18. On observera que la partie d'ancrage 36 sous forme de manchon est coaxiale à la paroi cylindrique 25 de la première partie 18 d'organe tubulaire 16, de manière à coopérer parfaitement du point de vue des formes. Cette coopération de forme permet une meilleure solidarisation du support de boîtier 32 et de l'organe tubulaire 16.

La platine de réception 34 s'étend à partir de la partie d'ancrage 36 dans une zone 46 opposée à la troncature et selon un plan moyen sensiblement tangent à la partie d'ancrage 36. Partant, la platine de réception 34 s'étend également sensiblement tangentiellement de la première partie 18 d'organe tubulaire 16.

De plus, comme illustré sur la Figure 2, où l'on perçoit l'intérieur de la première partie 18 de l'organe tubulaire 16, la partie d'ancrage 36 présente un ergot d'indexation 42 qui vient s'étendre à travers un orifice d'indexation 44 pratiqué dans la paroi cylindrique 25.

On observera que l'orifice d'indexation 44 est pratiqué sensiblement au sommet de la paroi cylindrique 25 de la première partie 18. Au surplus, l'ergot d'indexation 42 lui, vient s'étendre radialement, depuis la zone 46 opposée à la troncature selon une direction sensiblement perpendiculaire à l'axe de symétrie A sur une distance correspondant par exemple à la moitié du rayon. Partant, la platine de réception 34 vient s'étendre sensiblement horizontalement selon une composante perpendiculaire à la première partie 18 d'organe tubulaire 16.

Toujours sur la Figure 2, les deux pattes en regard 38, 40 présentent respectivement des extrémités libres 48, 50. Ces dernières sont respectivement terminées par des renflements 52, 54.

Aussi, comme illustré sur la Figure 3, la partie d'ancrage 36 formant manchon, présente un perçage de fixation 56 pratiqué radialement au niveau de la zone 46 opposée à la troncature 35.

En outre, la platine réception 34 présente différentes portions pour assurer une liaison rigide avec la partie d'ancrage et également pour permettre d'alléger le support de boîtier 32. Ainsi, elle présente trois nervures parallèles sensiblement triangulaires, une centrale 58, et deux latérales 60, 62. Ces trois nervures parallèles 58, 60, 62 sont reliées entre elles deux à deux grâce à deux fonds 64, 66, laissant libres trois bords parallèles, un central 68 et deux latéraux 70, 72 respectivement des trois nervures parallèles 58, 60, 62. Une dernière portion rectangulaire libre 74, s'étend librement dans le plan défini par les trois bords parallèles 68, 70, 72 et dans le prolongement des deux fonds 64, 66.

Ainsi, les trois nervures parallèles 58, 60, 62, présentent un bord sensiblement concave qui est ancré sur la partie d'ancrage 36 formant manchon, de façon que la dernière portion rectangulaire libre 74 et les trois bords parallèles 68, 70, 72 viennent s'étendre selon un plan venant tangenter la partie d'ancrage 36 formant manchon au niveau de la zone 46 opposée à la troncature 35. De la sorte, on obtient un porte-à-faux important de la platine de réception 34 avec une faible quantité de matière, ce qui permet de réduire sa masse.

Après avoir décrit structurellement le support de boitier 32, en combinaison avec la première partie 18 d'organe tubulaire 16, on décrira sont installation.

Ainsi, le support de boitier 32 réalisé en matière plastique est par nature élastiquement déformable, et notamment, les deux pattes en regard 38, 40, lesquelles sont susceptibles d'être écartées l'une de l'autre à force pour revenir à leur position de repos ensuite, lorsqu'on les relâche. Partant, le support de boîtier 32 est préalablement porté sur la première partie 18 d'organe tubulaire 16 au niveau de l'orifice d'indexation 44, de façon que les deux extrémités libres 48, 50 soient en appui de part et d'autre de l'orifice d'indexation 44. Ensuite, la partie d'ancrage 36 formant manchon est entraînée à force à cheval sur la première partie 18 d'organe tubulaire 16, de sorte que les deux pattes en regard 38, 40 s'écartent l'une de l'autre dans une première phase, puis se rapprochent pour venir enserrer la première partie 18 d'organe tubulaire 16, tandis que l'ergot d'indexation 42 s'engage à travers un orifice d'indexation 44. De façon avantageuse, mais non limitative, les deux extrémités libres 48, 50 des deux pattes en regard 38, 40 peuvent être reliées ensemble par une boucle métallique venant s'engager derrière les renflements 52, 54. De la sorte, la partie d'ancrage 36 est totalement prisonnière de l'organe tubulaire 16.

De la sorte, la mise en œuvre est simple, elle ne nécessite pas d'outil ou de moyens supplémentaires, et le support de boitier 32 est parfaitement solidaire de la première partie 18 d'organe tubulaire 16. La platine de réception 34 peut alors accueillir au moins un boîtier électronique. Il peut y être vissé ou bien collé.

De surcroît, d'autres supports de boîtier identiques peuvent être installés de la même manière, moyennant le percement d'autres orifices d'indexation dans la paroi cylindrique 25.

## Revendications

1. Traverse de poste de conduite de véhicule automobile comprenant un organe tubulaire (16) présentant une paroi cylindrique (25), destiné à venir s'étendre transversalement à l'intérieur d'un véhicule automobile et au moins un support de boîtier (32) électronique destiné à être monté en position fixe sur ledit organe tubulaire (16) ;
**caractérisée en ce que** ledit support de boîtier (32) électronique comprend, d'une part une platine de réception (34) et deux pattes en regard (38, 40) aptes à former pince et s'étendant selon une composante perpendiculaire à ladite platine de réception (34), et d'autre part, un ergot d'indexation (42) venant s'étendre entre lesdites deux pattes (38, 40) ;
et **en ce que** ladite paroi cylindrique (25) dudit organe tubulaire (16) présente un orifice d'indexation (44) apte à recevoir ledit ergot d'indexation (42) lorsque lesdites pattes (38, 40) viennent en prise à cheval sur ledit organe tubulaire (16).

2. Traverse de poste de conduite selon la revendication 1, **caractérisée en ce que** ledit support de boîtier (32) électronique présente un plan axial s'étendant entre lesdites deux pattes en regard (38, 40), et **en ce que** ladite platine de réception (34) s'étend selon une composante perpendiculaire audit plan axial.

3. Traverse de poste de conduite selon la revendication 1 ou 2, **caractérisée en ce que** ledit support de boîtier (32) électronique comprend une partie formant manchon (36), ladite partie formant manchon présentant une troncature axiale (35) pour former lesdites deux pattes en regard (38, 40).

4. Traverse de poste de conduite selon la revendication 3, **caractérisée en ce que** ladite platine de réception (34) s'étend selon un plan moyen sensiblement tangent à ladite partie formant manchon (36).

5. Traverse de poste de conduite selon la revendication 3 ou 4, **caractérisée en ce que** ladite partie formant manchon (36) présente une zone opposée à ladite troncature (35), et **en ce que** ladite platine de réception (34) s'étend librement à partir de ladite zone opposée.

6. Traverse de poste de conduite selon l'une quelconque des revendications 3 à 5, **caractérisée en ce que** ladite platine de réception (34) s'étend selon une direction sensiblement perpendiculaire à ladite partie formant manchon (36).

7. Traverse de poste de conduite selon l'une quelconque des revendications 3 à 6, **caractérisée en ce que** ladite partie formant manchon (36) présente un perçage de fixation (56).

8. Traverse de poste de conduite selon l'une quelconque des revendications 1 à 7, **caractérisée en ce que** lesdites pattes (38, 40) sont élastiquement déformables entre une position où elles sont rapprochées l'une de l'autre et une position où elles sont écartées l'une de l'autre.

9. Traverse de poste de conduite selon l'une quelconque des revendications 1 à 8, **caractérisée en ce que** ladite platine de réception (34), lesdites deux pattes (38, 40) et ledit ergot d'indexation (42) sont moulés ensemble d'une seule pièce.

10. Traverse de poste de conduite selon la revendication 9, **caractérisée en ce que** ladite platine de réception (34), lesdites deux pattes (38, 40) et ledit ergot d'indexation (42) sont moulés dans un matériau polymère.

## Patentansprüche

1. Cockpitquerträger eines Kraftfahrzeugs, welcher ein rohrförmiges Teil (16), das eine zylindrische Wand (25) aufweist und dazu bestimmt ist, sich quer im Inneren eines Kraftfahrzeugs zu erstrecken, und wenigstens einen Elektronikgehäuse-Träger (32), der dazu bestimmt ist, in einer festen Position auf dem rohrförmigen Teil (16) angebracht zu werden, umfasst;
**dadurch gekennzeichnet, dass** der Elektronikgehäuse-Träger (32) einerseits eine Aufnahmeplatte (34) und zwei einander gegenüberliegende Laschen (38, 40), die geeignet sind, eine Klammer zu bilden, und sich entlang einer zu der Aufnahmeplatte (34) senkrechten Komponente erstrecken, und andererseits einen Indexierungsansatz (42), der sich zwischen den zwei Laschen (38, 40) erstreckt, umfasst;
und dadurch, dass die zylindrische Wand (25) des rohrförmigen Teils (16) eine Indexierungsöffnung (44) aufweist, die geeignet ist, den Indexierungsansatz (42) aufzunehmen, wenn die Laschen (38, 40) in eine Position der Umgreifung des rohrförmigen Teils (16) gelangen.

2. Cockpitquerträger nach Anspruch 1, **dadurch gekennzeichnet, dass** der Elektronikgehäuse-Träger (32) eine axiale Ebene aufweist, die sich zwischen den zwei einander gegenüberliegende Laschen (38, 40) erstreckt, und dadurch, dass sich die Aufnahmeplatte (34) entlang einer zu der axialen Ebene senkrechten Komponente erstreckt.

3. Cockpitquerträger nach Anspruch 1 oder 2, **dadurch gekennzeichnet, dass** der Elektronikgehäuse-Träger (32) einen eine Hülse bildenden Teil (36) umfasst, wobei der eine Hülse bildende Teil einen axialen Ausschnitt (35) aufweist, um die zwei einander gegenüberliegende Laschen (38, 40) zu bilden.

4. Cockpitquerträger nach Anspruch 3, **dadurch gekennzeichnet, dass** sich die Aufnahmeplatte (34) entlang einer Mittelebene erstreckt, die im Wesentlichen tangential zu dem eine Hülse bildenden Teil (36) ist.

5. Cockpitquerträger nach Anspruch 3 oder 4, **dadurch gekennzeichnet, dass** der eine Hülse bildende Teil (36) einen dem Ausschnitt (35) gegenüberliegenden Bereich aufweist, und dadurch, dass sich die Aufnahmeplatte (34) von dem gegenüberliegenden Bereich aus freitragend erstreckt.

6. Cockpitquerträger nach einem der Ansprüche 3 bis 5, **dadurch gekennzeichnet, dass** sich die Aufnahmeplatte (34) in einer Richtung erstreckt, die im Wesentlichen senkrecht zu dem eine Hülse bildenden Teil (36) ist.

7. Cockpitquerträger nach einem der Ansprüche 3 bis 6, **dadurch gekennzeichnet, dass** der eine Hülse bildende Teil (36) eine Befestigungsbohrung (56) aufweist.

8. Cockpitquerträger nach einem der Ansprüche 1 bis 7, **dadurch gekennzeichnet, dass** die Laschen (38, 40) zwischen einer Position, in der sie aneinander angenähert sind, und einer Position, in der sie voneinander entfernt sind, elastisch verformbar sind.

9. Cockpitquerträger nach einem der Ansprüche 1 bis 8, **dadurch gekennzeichnet, dass** die Aufnahmeplatte (34), die zwei Laschen (38, 40) und der Indexierungsansatz (42) zusammen aus einem Stück geformt sind.

10. Cockpitquerträger nach Anspruch 9, **dadurch gekennzeichnet, dass** die Aufnahmeplatte (34), die zwei Laschen (38, 40) und der Indexierungsansatz (42) aus einem Polymermaterial geformt sind.

## Claims

1. Motor vehicle driving station crossmember comprising a tubular member (16) having a cylindrical wall (25), said member being intended to extend transversally within a motor vehicle, and at least one electronic housing support (32) intended to be mounted in a fixed position on said tubular member (16);
**characterized in that** said electronic housing support (32) comprises, on the one hand, a receiving plate (34) and two facing tabs (38, 40) able to form a clamp and extending with a component perpendicular to said receiving plate (34), and, on the other hand, an indexing lug (42) extending between said two tabs (38, 40);
and **in that** said cylindrical wall (25) of said tubular member (16) has an indexing orifice (44) able to receive said indexing lug (42) when said tabs (38, 40) engage in a straddling manner on said tubular member (16).

2. Driving station crossmember according to Claim 1, **characterized in that** said electronic housing support (32) has an axial plane extending between said two facing tabs (38, 40), and **in that** said receiving plate (34) extends with a component perpendicular to said axial plane.

3. Driving station crossmember according to Claim 1 or 2, **characterized in that** said electronic housing support (32) comprises a sleeve-forming part (36), said sleeve-forming part having an axial truncation (35) to form said two facing tabs (38, 40).

4. Driving station crossmember according to Claim 3, **characterized in that** said receiving plate (34) extends along a median plane substantially tangential to said sleeve-forming part (36).

5. Driving station crossmember according to Claim 3 or 4, **characterized in that** said sleeve-forming part (36) has a region opposed to said truncation (35), and **in that** said receiving plate (34) extends freely from said opposed region.

6. Driving station crossmember according to any one of Claims 3 to 5, **characterized in that** said receiving plate (34) extends in a direction substantially perpendicular to said sleeve-forming part (36).

7. Driving station crossmember according to any one of Claims 3 to 6, **characterized in that** said sleeve-forming part (36) has a fastening aperture (56).

8. Driving station crossmember according to any one of Claims 1 to 7, **characterized in that** said tabs (38, 40) are elastically deformable between a position in which they are closer to one another and a position in which they are further away from one another.

9. Driving station crossmember according to any one of Claims 1 to 8, **characterized in that** said receiving plate (34), said two tabs (38, 40) and said indexing lug (42) are moulded together in one piece.

10. Driving station crossmember according to Claim 9, **characterized in that** said receiving plate (34), said two tabs (38, 40) and said indexing lug (42) are moulded from a polymer material.
